(19) Europäisches Patentamt
European Patent Office
Office européen des brevets

(11) **EP 3 665 049 B1**

(12) **EUROPÄISCHE PATENTSCHRIFT**

(45) Veröffentlichungstag und Bekanntmachung des Hinweises auf die Patenterteilung:
**10.08.2022   Patentblatt 2022/32**

(21) Anmeldenummer: **18737498.8**

(22) Anmeldetag: **15.06.2018**

(51) Internationale Patentklassifikation (IPC):
**B60T 8/172** $^{(2006.01)}$

(52) Gemeinsame Patentklassifikation (CPC):
**B60T 8/172; B60W 40/068;** B60T 2210/122;
B60W 2555/20; B60W 2556/50

(86) Internationale Anmeldenummer:
**PCT/EP2018/066002**

(87) Internationale Veröffentlichungsnummer:
**WO 2019/029875 (14.02.2019 Gazette 2019/07)**

(54) **VERFAHREN ZUM BESTIMMEN EINES REIBWERTS FÜR EINEN KONTAKT ZWISCHEN EINEM REIFEN EINES FAHRZEUGS UND EINER FAHRBAHN UND VERFAHREN ZUM STEUERN EINER FAHRZEUGFUNKTION EINES FAHRZEUGS**

METHOD FOR DETERMINING A FRICTION VALUE FOR A CONTACT BETWEEN A TYRE OF A VEHICLE AND A ROAD, AND METHOD FOR CONTROLLING A VEHICLE FUNCTION OF A VEHICLE

PROCÉDÉ DE DÉTERMINATION D'UN COEFFICIENT DE FROTTEMENT POUR UN CONTACTE ENTRE UN PNEU D'UN VÉHICULE ET UNE CHAUSSÉE ET PROCÉDÉ DE COMMANDE D'UNE FONCTION D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.08.2017   DE 102017214026**

(43) Veröffentlichungstag der Anmeldung:
**17.06.2020   Patentblatt 2020/25**

(73) Patentinhaber: **Robert Bosch GmbH**
**70442 Stuttgart (DE)**

(72) Erfinder:
 • **GEISLER, Simon**
   **74072 Heilbronn (DE)**
 • **LELLMANN, Christian**
   **70435 Stuttgart (DE)**

(56) Entgegenhaltungen:
   DE-A1-102012 112 725      DE-A1-102015 201 383
   US-A1- 2011 144 875      US-A1- 2015 142 388

 • TAE J. KWON ET AL: "Modelling of winter road surface temperature (RST) - A GIS-based approach", 2017 4TH INTERNATIONAL CONFERENCE ON TRANSPORTATION INFORMATION AND SAFETY (ICTIS), 1. August 2017 (2017-08-01), - 10. August 2017 (2017-08-10), Seiten 551-556, XP055501555, DOI: 10.1109/ICTIS.2017.8047820 ISBN: 978-1-5386-0437-3
 • Bayley: "Ordinary Kriging (Ch. 5.5 -Bailey & Gatrell)", , 22. März 2012 (2012-03-22), XP055500710, Gefunden im Internet: URL:https://msu.edu/~ashton/classes/866/papers/gatrell_ordkrige.pdf [gefunden am 2018-08-20]

**Beschreibung**

Stand der Technik

Die Erfindung geht von einer Vorrichtung oder einem Verfahren nach Gattung der unabhängigen Ansprüche aus. Gegenstand der vorliegenden Erfindung ist auch ein Computerprogramm.

Für Fahrzeugbewegungen kann unter anderem der Reibwert zwischen Fahrzeug und Fahrbahn von Bedeutung sein. Für eine direkte aktive Reibwertmessung in speziellen Situationen, wie beispielsweise einer Flugfeldreibwertbestimmung, können Messfahrzeuge mit Reibwertmesstechnik zum Einsatz kommen.

Die DE 10 2005 060 219 A1 beschreibt eine Abschätzung eines

Reibkoeffizienten zwischen Straße und Reifen eines Kraftfahrzeuges.

Weitere Verfahren zur Abschätzung des Reibwertes zwischen Fahrzeug und Fahrbahn sind aus US 2015/142388 A1, US 2011 /144875 A1, DE 10 2015 201383 A1 und DE 10 2012 112725 A1 bekannt.

Offenbarung der Erfindung

Vor diesem Hintergrund werden mit dem hier vorgestellten Ansatz ein Verfahren, weiterhin eine Vorrichtung, welche dieses Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Gemäß Ausführungsformen kann ein Reibwert zwischen einer Fahrbahn und einem Fahrzeug insbesondere durch einen zeitfolgenbasierten statistischen Ansatz bestimmt werden. Hierbei kann der Reibwert beispielsweise unter Verwendung von Sensorikdaten bzw. Sensorsignalen als ein Schätzwert bzw. eine Wahrscheinlichkeitsverteilung von Reibwerten bestimmt werden. Hierzu können insbesondere Prozesse aus der Geo-Statistik zur Modellierung räumlicher Zusammenhänge zwischen Reibwerten verwendet werden. Der Reibwert kann zum Steuern einer Fahrzeugfunktion eines Fahrzeugs verwendet werden, insbesondere einer Assistenzfunktion. Insbesondere kann eine serverbasierte Erstellung einer Reibwertkarte unter Verwendung eines geostatistischen Prozesses realisiert werden.

Vorteilhafterweise kann gemäß Ausführungsformen insbesondere eine genaue und zuverlässige Einschätzung einer Reibung zwischen Fahrzeug und Fahrbahn ermöglicht werden. Hierbei können beispielsweise Daten aus einer Mehrzahl von Quellen verwendet werden und somit Schwarmwissen genutzt werden. So können insbesondere auch Auswirkungen etwaiger Sensorfehler verringert werden und Ergebnisse statistischer Auswertung für die Reibwertbestimmung verbessert werden. Des Weiteren kann beispielsweise ein großer Nutzerkreis angesprochen werden. Auch kann ein Einrichtungsaufwand zum Nutzen der Reibwertbestimmung gering und kostengünstig gehalten werden, insbesondere im Vergleich zu dedizierter Reibwert-Sensorik. Optional kann die Reibwertbestimmung kann mit anderen Connectivity-Funktionen kombiniert werden. Insbesondere kann die Reibwertbestimmung Ergebnisse über Straßenabschnitte auch für Fahrzeuge bereitstellen, die solche Straßenabschnitte noch nicht selbst befahren haben.

Es wird ein Verfahren zum Bestimmen eines Reibwerts für einen Kontakt zwischen einem Reifen eines Fahrzeugs und einer Fahrbahn vorgestellt, wobei das Verfahren folgende Schritte aufweist:

Verarbeiten von Sensorsignalen unter Verwendung einer Verarbeitungsvorschrift, um verarbeitete Sensorsignale zu erzeugen, wobei die Sensorsignale von zumindest einer Erfassungseinrichtung eingelesene, mit dem Reibwert korrelierbare Zustandsdaten repräsentieren, wobei die verarbeiteten Sensorsignale zumindest einen vorläufigen Reibwert bezüglich zumindest eines gemessenen Teilabschnitts der Fahrbahn repräsentieren; und

Ermitteln des Reibwerts für einen gesuchten Teilabschnitt der Fahrbahn unter Verwendung der verarbeiteten Sensorsignale und eines geostatistischen Prozesses.

Dieses Verfahren kann beispielsweise in Software oder Hardware oder in einer Mischform aus Software und Hardware beispielsweise in einer Vorrichtung oder einem Steuergerät implementiert sein. Hierbei kann der Reibwert als ein Schätzwert und zusätzlich oder alternativ als eine Wahrscheinlichkeitsverteilung einer Reibung an einer bestimmten Stelle oder Region der Fahrbahn bestimmt werden. Der Reibwert kann auch einen Wertebereich repräsentieren, wobei der Reibwert beispielsweise einen Mittelwert und ein Konfidenzintervall oder dergleichen repräsentiert. Der Reibwert kann zur Verwendung für eine Ansteuerung einer Fahrzeugfunktion eines Fahrzeugs bestimmt sein, insbesondere eine Assistenzfunktion oder ein Assistenzsystem eines Fahrzeugs. Die Zustandsdaten können durch die zumindest eine Erfassungseinrichtung gewonnene, physikalische Messwerte repräsentieren. Eine Erfassungseinrichtung kann ausgebildet sein, um die Zustandsdaten in Gestalt der Sensorsignale zu erfassen und zusätzlich oder alternativ bereitzustellen. Ein vorläufiger Reibwert kann einen für einen gemessenen Teilabschnitt der Fahrbahn bestimmten Reibwert repräsentieren. Ein vorläufiger Reibwert kann eine gültigen Reibwert für einen gemessenen Teilabschnitt der Fahrbahn repräsentieren. Das Verfahren kann auch einen Schritt des Einlesens der Sensorsignale von einer Schnittstelle zu der zumindest einen Erfassungseinrichtung aufweisen. Auch kann das Verfahren einen Schritt des Bereitstellens eines Reibwerts in Gestalt eines Steuersignals zur Ausgabe an eine Schnittstelle zu mindestens einem Fahrzeug aufweisen.

Gemäß der Erfindung wird im Schritt des Ermittelns der Reibwert für den gesuchten Teilabschnitt der Fahrbahn unter Verwendung von Kriging als geostatistischem Prozess ermittelt. Hierbei wird ein Zusammenhang zwischen dem Reibwert für den gesuchten Teilabschnitt der Fahrbahn und dem zumindest einen vorläufigen Reibwerts bezüglich zumindest eines gemessenen Teilabschnitts der Fahrbahn unter Verwendung eines Gewichtungsfaktors modelliert. Der Gewichtungsfaktor wird mittels Kriging bestimmt.

Das sogenannte Kriging kann auch als Krigen oder Gaußprozess-Regression bezeichnet werden. Das Kriging kann als sogenanntes Ordinary Kriging bzw. gewöhnliches Kriging ausgeführt sein oder werden. Denkbar ist auch die Verwendung eines anderen Kriging-Verfahrens, welches nahezu äquivalent zu dem Ordinary Kringing eingesetzt werden kann. Der einzige Unterschied liegt in der Regel in den getroffenen Annahmen für die Herleitung der Formeln. Eine solche Ausführungsform bietet den Vorteil, dass Reibwerte auch für Zwischenräume zwischen Messpunkten genau bestimmt werden können. So kann auch eine Erstellung einer räumlichen Karte ermöglicht werden, indem Zusammenhänge zwischen Messorten ermittelt werden, um auch Reibwerte an gewünschten Stellen zwischen Messpunkten optimal prädizieren zu können. Auch kann im Schritt des Ermittelns ein räumlicher Zusammenhang zwischen Teilabschnitten der Fahrbahn unter Verwendung eines Semivariogramms modelliert werden. Insbesondere kann mittels des Semivariogramms der vorstehend genannte Gewichtungsfaktor bestimmt werden. Eine solche Ausführungsform bietet den Vorteil, dass eine räumliche Varianz eines geografischen Gebietes sicher und zutreffend berücksichtigt werden kann. Somit kann der Reibwert vorteilhaft als ein gewichteter Mittelwert ermittelt werden. Ferner kann im Schritt des Ermittelns der Reibwert für den gesuchten Teilabschnitt der Fahrbahn aus vorläufigen Reibwerten bezüglich gemessener Teilabschnitte der Fahrbahn unter Verwendung des geostatistischen Prozesses interpoliert werden. Zusätzlich oder alternativ können im Schritt des Ermittelns vorläufige Reibwerte bezüglich eines gemessenen Teilabschnitts der Fahrbahn unter Verwendung des geostatistischen Prozesses zu einem Reibwert zusammengefasst werden. Eine solche Ausführungsform bietet den Vorteil, dass Reibwerte für Zwischenräume zwischen Messpunkten zuverlässig und genau bestimmt werden können bzw. Lücken in einer Reibwertkarte zuverlässig und genau geschlossen werden können.

Zudem kann im Schritt des Ermittelns für jeden gemessenen Teilabschnitt der Fahrbahn zumindest ein Parameter des geostatistischen Prozesses eingestellt werden. Insbesondere kann der zumindest eine Parameter des geostatistischen Prozesses abhängig von einer Art, Eigenschaft und zusätzlich oder alternativ Herkunft der Zustandsdaten eingestellt werden. Eine solche Ausführungsform bietet den Vorteil, dass der geostatistische Prozess an die Art von Sensorsignalen bzw. Erfassungseinrichtungen angepasst werden kann, um in einer Einsatzumgebung verfügbare Datenquellen für eine genaue Bestimmung des Reibwerts berücksichtigen zu können.

Es wird auch ein Verfahren zum Steuern einer Fahrzeugfunktion eines Fahrzeugs vorgestellt, wobei das Verfahren folgende Schritte aufweist:

Empfangen eines Steuersignals, das unter Verwendung eines gemäß einer Ausführungsform des vorstehend genannten Verfahrens bestimmten Reibwertes erzeugt ist; und

Ansteuern der Fahrzeugfunktion unter Verwendung des empfangenen Steuersignals.

Dieses Verfahren kann beispielsweise in Software oder Hardware oder in einer Mischform aus Software und Hardware beispielsweise in einer Vorrichtung oder einem Steuergerät implementiert sein. Die Fahrzeugfunktion kann eine Assistenzfunktion eines Assistenzsystems des Fahrzeugs repräsentieren. Bei dem Fahrzeug kann es sich um ein Fahrzeug für hochautomatisiertes Fahren handeln.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuerund/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes sind in den Zeichnungen dargestellt und in der nachfolgenden Beschreibung näher erläutert. Es zeigt:

Fig. 1 eine schematische Darstellung eines vernetzten Systems gemäß einem Ausführungsbeispiel;

Fig. 2 eine schematische Darstellung von Teilen des Systems aus Fig. 1;

Fig. 3 ein Ablaufdiagramm eines Verfahrens zum Bestimmen gemäß einem Ausführungsbeispiel; und

Fig. 4 ein Ablaufdiagramm eines Verfahrens zum Steuern gemäß einem Ausführungsbeispiel.

Bevor Ausführungsbeispiele nachfolgend unter Bezugnahme auf die Figuren eingehender beschrieben sind, werden zunächst Hintergründe und Grundlagen von Ausführungsbeispielen kurz erläutert.

Entwicklungen im Bereich vernetzter Fahrzeuge ermöglichen beispielsweise mittels sogenannter Connectivity-Einheiten einen Austausch von Sensorik-Daten über aktuelle Fahrbahn, Geschwindigkeit, Verkehrssituation etc. Durch eine Verarbeitung solcher Daten und einen daraus resultierenden Informationsgewinn über Straßenabschnitte können beispielsweise hochautomatisiertes Fahren und prädiktive Fahrerassistenzsysteme mit einem Zugewinn an Sicherheit betrieben werden. Insbesondere können einem Fahrzeug Informationen über eine Umgebung bereitgestellt, die seitens des Fahrzeugs allein mit eigener Sensorik nicht generieren könnten.

In diesem Kontext ist auch der Reibwert einen Kontakt zwischen Straße bzw. Fahrbahn und Fahrzeug bedeutsam. In Personenkraftwagen und dergleichen sind üblicherweise keine dedizierten Reibwertsensoren verbaut. Insbesondere ist es durch serverseitige Verarbeitung vieler Sensorikdaten von vielen verschiedenen Fahrzeugen, z. B. Beschleunigungssensorik, in Kombination mit Wettersensorik und straßenseitiger Sensorik, z. B. Glättesensoren, gemäß Ausführungsformen möglich, einen Reibwert für Straßenabschnitte zu bestimmen bzw. zu schätzen. Solche Informationen über den Reibwert können dann zur weiteren Funktionsentwicklung mit dem Ziel der Erhöhung von Sicherheit und Komfort verwendet werden. Straßenreibwerte, in einer Reibwertkarte eingetragen, können zum Beispiel genutzt werden, um automatisiert Fahrzeuggeschwindigkeiten zum Beispiel vor Kurven zu setzen. So können gefährliche Situationen oder Unfälle durch Abkommen von der Fahrspur, insbesondere bei schwierigen Straßenverhältnissen wie Nässe oder Schnee, vermieden werden.

Für eine direkte aktive Reibwertmessung in speziellen Situationen, z. B. Flugfeldreibwertbestimmung, gibt es Messfahrzeuge mit Reibwertmesstechnik. Hier seien beispielsweise der sogenannte Surface Friction Tester sowie die sogenannte Sideway-force Coefficient Routine Investigation Machine genannt. Beide basieren auf einer Kraftmessung. Der Surface Friction Tester ist ein Fahrzeuganhänger mit drei Rädern. Das dritte Rad wird bis in den physikalischen Grenzbereich, bis zum Reifenstillstand, abgebremst. Über die dazu nötige Bremskraft bzw. das dazu nötige Bremsmoment lässt sich die Reibkraft und mit Hilfe der bekannten Normalkraft der Reibwert bestimmen. Die Sideway-force Coefficient Routine Investigation Machine bestimmt die Reibkraft über die Seitenkraft eines fünften, um 20 Grad zur Fahrtrichtung geneigten Rades. Der Reibwert kann wieder mit bekannter Normalkraft bestimmt werden.

Der Bereich Geo-Statistik ist ein in der Geologie und auf anderen Gebieten verwendetes Verfahren zum Schätzen von beispielsweise Bodenschätzen oder anderen Eigenschaften, Größen und dergleichen bei wenigen vorliegenden Messpunkten.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

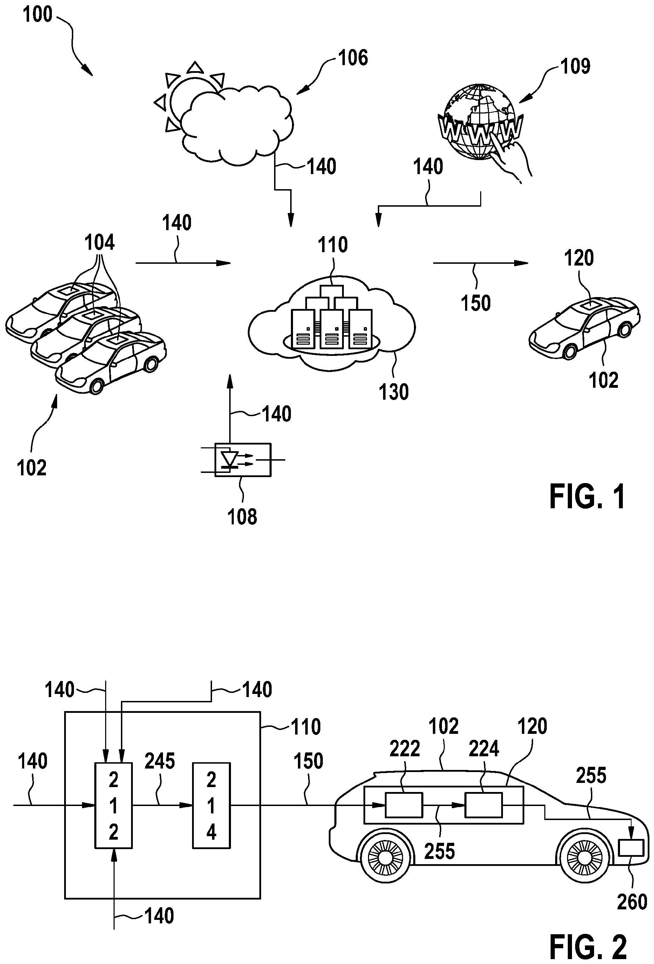

Fig. 1 zeigt eine schematische Darstellung eines vernetzten Systems 100 gemäß einem Ausführungsbeispiel. Das System 100 ist ausgebildet, um einen Reibwert für Straßenverkehr zu bestimmen und verwendbar zu machen. Mindestens weist das System 100 hierzu eine erste Vorrichtung 110 und eine zweite Vorrichtung 120 auf. Ferner dem System 100 zugehörig und/oder zugeordnet sind lediglich beispielhaft vier Fahrzeuge 102, Fahrzeugsensoren 104 in Gestalt von Fahrdatensensoren und/oder fahrzeuggebundenen Umgebungssensoren, beispielhaft lediglich ein Umgebungssensor 106, beispielhaft lediglich ein Infrastruktursensor 108, zumindest eine Datenquelle 109 im Internet sowie eine Server-Einrichtung 130, ein sogenanntes Server-Backend 130, eine Datenwolke 130 bzw. eine sogenannte Cloud 130. Eine signalübertragungsfähige Vernetzung innerhalb des Systems 100 kann beispielsweise über Funk oder eine andere Datenübertragungsart realisiert sein.

Dabei ist die erste Vorrichtung 110 als ein Teil der Server-Einrichtung 130 realisiert. Die zweite Vorrichtung 120 ist aus Darstellungsgründen in Fig. 1 lediglich beispielhaft in einem der Fahrzeuge 102 angeordnet, das hier als ein Empfängerfahrzeug 102 bezeichnet werden kann. Die Fahrdatensensoren 104 sind lediglich beispielhaft in drei der Fahrzeuge 102 angeordnet, die hier als Senderfahrzeuge 102 bezeichnet werden können. Auch das Empfängerfahrzeug 102 kann einen Fahrzeugsensor 104 aufweisen. Auch die Senderfahrzeuge 102 können jeweils eine zweite Vorrichtung 120 aufweisen.

Die erste Vorrichtung 110 ist ausgebildet, um einen Reibwert für einen Kontakt zwischen einem Reifen eines Fahrzeugs 102 und einer Fahrbahn zu bestimmen. Hierbei ist die erste Vorrichtung 110 ausgebildet, um Sensorsignale 140 von den Fahrzeugsensoren 104, dem Umgebungssensor 106, dem Infrastruktursensor 108 und der Datenquelle 109 einzulesen. Die Sensorsignale 140 repräsentieren Zustandsdaten bzw. physikalische Messwerte, beispielsweise Umgebungsdaten für einen Umgebungsbereich von dem Umgebungssensor 106, Infrastrukturdaten für den Umgebungsbereich von dem Infrastruktursensor 108 und/oder Fahrdaten und/oder Umgebungsdaten der Fahrzeuge 102 von den Fahrzeugsensoren 104. Ferner ist die erste Vorrichtung 110 ausgebildet, um unter Verwendung der Sensorsignale 140 den Reibwert zu bestimmen und ein den Reibwert repräsentierendes oder aufweisendes Steuersignal 150 bereitzustellen oder auszugeben. Die zweite Vorrichtung 120 ist ausgebildet, um unter Verwendung des Steuersignals 150 eine Fahrzeugfunktion des Fahrzeugs 102, hier des Empfängerfahrzeugs 102, zu steuern.

Das System 100 ist so aufgebaut, dass viele Fahrzeuge 102 beispielsweise über ein Mobilfunknetz die Sensorsignale 140 bzw. Sensorikdaten an das Server-Backend 130 bzw. die in demselben realisierte erste Vorrichtung 110 senden. Hinzu kommen Infrastrukturdaten, beispielsweise Straßensensorikdaten, sowie Umgebungsdaten, beispielsweise Wetterdaten, die abgefragt werden können. Mittels der ersten Vorrichtung 110 werden die Sensorsignale 140 gemäß einem Ausführungsbeispiel beispielsweise mittels eines Kringing-Verfahrens in Zeitfolgen verarbeitet, um einen ortsabhängigen Reibwert, hier auch vorläufiger Reibwert genannt, zu aggregieren. Dieser aggregierte Reibwert kann in Form des Steuersignals 150 an weitere Fahrzeuge 102 ortsgenau weitergegeben werden, um teilnehmenden Fahrzeugen 102 so eine Information über den derzeitigen Reibwert in einer jeweiligen Region bzw. einem jeweiligen Umgebungsbereich zu geben.

Fig. 2 zeigt eine schematische Darstellung von Teilen des Systems aus Fig. 1. Von dem System aus Fig. 1 sind hierbei in der Darstellung von Fig. 2 beispielhaft lediglich die erste Vorrichtung 110 und das Empfängerfahrzeug 102 mit der zweiten Vorrichtung 120 und einer Fahrzeugfunktion 260 gezeigt. Bei der Fahrzeugfunktion 260 handelt es sich beispielsweise um eine Assistenzfunktion eines Assistenzsystems des Empfängerfahrzeugs 102.

Die erste Vorrichtung 110 weist eine Verarbeitungseinrichtung 212 und eine Ermittlungseinrichtung 214 auf. Die Verarbeitungseinrichtung 212 ist ausgebildet, um die Sensorsignale 140 unter Verwendung einer Verarbeitungsvorschrift zu verarbeiten, um verarbeitete Sensorsignale 245 zu erzeugen. Die Sensorsignale 140 repräsentieren von zumindest einer Erfassungseinrichtung eingelesene, mit dem Reibwert korrelierbare Zustandsdaten. Die verarbeiteten Sensorsignale 245 repräsentieren zumindest einen vorläufigen Reibwert bezüglich zumindest eines gemessenen Teilabschnitts der Fahrbahn. Bei der zumindest einen Erfassungseinrichtung handelt es sich hierbei um die Fahrzeugsensoren, den Umgebungssensor, den Infrastruktursensor und/oder die Datenquelle aus Fig. 1. Die Ermittlungseinrichtung 214 ist ausgebildet, um unter Verwendung der verarbeiteten Sensorsignale 245 und eines geostatistischen Prozesses den Reibwert für einen gesuchten Teilabschnitt der Fahrbahn zu ermitteln. Die erste Vorrichtung 110 ist ausgebildet, um den ermittelten Reibwert in Gestalt des Steuersignals 150 auszugeben oder zur Ausgabe bereitzustellen.

Die zweite Vorrichtung 120 weist eine Empfangseinrichtung 222 und eine Ansteuereinrichtung 224 auf. Dabei ist die Empfangseinrichtung 222 ausgebildet, um das Steuersignal 150 von der ersten Vorrichtung 110 zu empfangen. Ferner ist die Empfangseinrichtung 222 ausgebildet, um ein empfangenes Steuersignal 255 an die Ansteuereinrichtung 224 auszugeben oder bereitzustellen. Die Ansteuereinrichtung 224 ist ausgebildet, um das empfangene Steuersignal 255 an die Fahrzeugfunktion 260 weiterzuleiten, um die Fahrzeugfunktion 260 unter Verwendung des empfangenen Steuersignals 255 anzusteuern.

Alternativ kann die Fahrzeugfunktion 260 direkt unter Verwendung des Steuersignals 150 ansteuerbar sein. Hierbei kann die erste Vorrichtung 110 ausgebildet sein, um ein geeignetes Ansteuersignal 150 für die Fahrzeugfunktion 260 bereitzustellen oder auszugeben. Dabei kann die zweite Vorrichtung weggelassen sein.

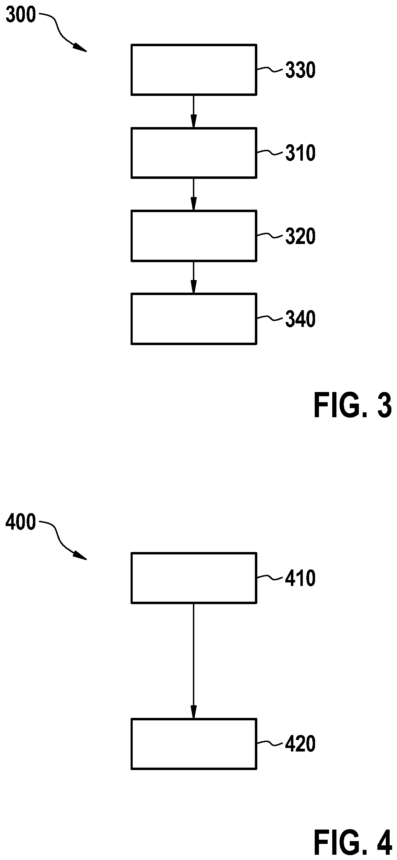

Fig. 3 zeigt ein Ablaufdiagramm eines Verfahrens 300 zum Bestimmen gemäß einem Ausführungsbeispiel. Das Verfahren 300 ist ausführbar, um einen Reibwert für einen Kontakt zwischen einem Reifen eines Fahrzeugs und einer Fahrbahn zu bestimmen. Dabei ist das Verfahren 300 zum Bestimmen in Verbindung mit dem System aus Fig. 1 bzw. Fig. 2 ausführbar. Auch ist das Verfahren 300 zum Bestimmen unter Verwendung bzw. mittels der ersten Vorrichtung aus Fig. 1 bzw. Fig. 2 ausführbar.

In einem Schritt 310 des Verarbeitens werden bei dem Verfahren 300 zum Bestimmen Sensorsignale unter Verwendung einer Verarbeitungsvorschrift verarbeitet, um verarbeitete Sensorsignale zu erzeugen. Die Sensorsignale repräsentieren von zumindest einer Erfassungseinrichtung eingelesene, mit dem Reibwert korrelierbare Zustandsdaten. Die verarbeiteten Sensorsignale repräsentieren zumindest einen vorläufigen Reibwert bezüglich zumindest eines gemessenen Teilabschnitts der Fahrbahn. Nachfolgend wird in einem Schritt 320 des Ermittelns der Reibwert für einen gesuchten Teilabschnitt der Fahrbahn unter Verwendung der verarbeiteten Sensorsignale und eines geostatistischen Prozesses ermittelt.

Gemäß einem Ausführungsbeispiel wird im Schritt 320 des Ermittelns der Reibwert für den gesuchten Teilabschnitt der Fahrbahn unter Verwendung von Kriging als geostatistischem Prozess ermittelt. Ein Zusammenhang zwischen dem Reibwert für den gesuchten Teilabschnitt der Fahrbahn und dem zumindest einen vorläufigen Reibwerts bezüglich zumindest eines gemessenen Teilabschnitts der Fahrbahn wird dabei unter Verwendung eines Gewichtungsfaktors modelliert. Der Gewichtungsfaktor wird mittels Kriging bestimmt. Ferner wird insbesondere ein räumlicher Zusammenhang zwischen Teilabschnitten der Fahrbahn unter Verwendung eines Semivariogramms modelliert. Gemäß einem weiteren Ausführungsbeispiel wird im Schritt 320 des Ermittelns unter Verwendung des geostatistischen Prozesses der Reibwert für den gesuchten Teilabschnitt der Fahrbahn aus vorläufigen Reibwerten bezüglich gemessener Teilabschnitte der Fahrbahn interpoliert und/oder werden vorläufige Reibwerte bezüglich eines gemessenen Teilabschnitts der Fahrbahn zu einem Reibwert zusammengefasst. Optional wird im Schritt 320 des Ermittelns für jeden gemessenen Teilabschnitt der Fahrbahn zumindest ein Parameter des geostatistischen Prozesses eingestellt bzw. angepasst bzw. verändert. Gemäß einem Ausführungsbeispiel werden im Schritt 310 des Verarbeitens die Sensorsignale unter Verwendung eines geeigneten Signalverarbeitungsverfahrens verarbeitet.

Das Verfahren 300 zum Bestimmen weist gemäß einem Ausführungsbeispiel auch einen Schritt 330 des Einlesens der Sensorsignale von einer Schnittstelle zu der zumindest einen Erfassungseinrichtung auf. Auch weist das Verfahren 300 zum Bestimmen optional einen Schritt 340 des Bereitstellens des Reibwerts in Gestalt eines Steuersignals zur Ausgabe an eine Schnittstelle zu mindestens einem Fahrzeug auf.

Fig. 4 zeigt ein Ablaufdiagramm eines Verfahrens 400 zum Steuern gemäß einem Ausführungsbeispiel. Das Verfahren 400 ist ausführbar, um eine Fahrzeugfunktion eines Fahrzeugs zu steuern. Dabei ist das Verfahren 400 zum Steuern in Verbindung mit dem System aus Fig. 1 bzw. Fig. 2 ausführbar. Auch ist das Verfahren 400 zum Steuern unter Verwendung bzw. mittels der zweiten Vorrichtung aus Fig. 1 bzw. Fig. 2 ausführbar.

In einem Schritt 410 des Empfangens wird bei dem Verfahren 400 ein Steuersignal empfangen, das unter Verwendung eines Reibwertes erzeugt ist, der durch Ausführen des Verfahrens zum Bestimmen aus Fig. 3 oder eines ähnlichen Verfahrens bestimmt ist. In einem nachfolgenden Schritt 420 des Ansteuerns wird unter Verwendung des im Schritt 410 des Empfangens empfangenen Steuersignals die Fahrzeugfunktion angesteuert.

Unter Bezugnahme auf die vorstehend beschriebenen Figuren werden Ausführungsbeispiele nachfolgend zusammenfassend nochmals mit anderen Worten beschrieben und/oder kurz vorgestellt.

Durch verschiedene Schätzverfahren, beispielsweise unter Verwendung von Sensorsignalen 140 hinsichtlich Fahrzeugdaten, Wetterdaten, etc., werden im Schritt 310 des Verarbeitens bzw. mittels der Verarbeitungseinrichtung 212 zunächst vorläufige, räumlich verteilte Reibwerte mit der jeweiligen Unsicherheit des Messwertes zum jeweiligen Messzeitpunkt erhalten. Bei Schätzverfahren werden in der Regel Reibwerte für einen ganz bestimmten Ort gemessen, d. h. es existieren keine oder unzureichende Daten für Zwischenräume, was allerdings für eine Generierung einer Karte nachteilig ist, aber esgemäß Ausführungsbeispielen erreicht werden kann, dass aus diesen Daten eine kontinuierliche Karte erzeugt wird. Auch können sich in manchen Bereichen Messpunkte häufen und können gemäß einem Ausführungsbeispiel zusammengefasst werden, was ebenfalls für die Erstellung einer Karte vorteilhaft ist.

Zur Erstellung einer räumlichen Karte können gemäß einem Ausführungsbeispiel Zusammenhänge ermittelt werden, um für die Karte auch Reibwerte an Stellen zwischen Messpunkten optimal prädizieren zu können. Des Weiteren ist es für die Nutzer der Reibwertkarte gemäß eine Ausführungsbeispiel möglich, eine Genauigkeit der Reibwerte aus einer solchen Reibwertkarte zu erkennen, um ggf. Aktionen für weiterführende Funktionen, wie beispielsweise eine Regelung einer Fahrzeuggeschwindigkeit in Kurven aufgrund dieser Daten, herzuleiten.

Um einen Reibwert an einer beliebigen Stelle $s_0$ bzw. einem beliebigen Teilabschnitt der Fahrbahn prädizieren zu können, kann beispielsweise nachfolgender gewichteter Mittelwert verwendet werden:

$$\hat{\mu}(s_0) = \sum_{i=1}^{N} w_i \mu(s_i) = \boldsymbol{w}\boldsymbol{\mu}$$

Mit $\hat{\mu}(s_0)$ als prädizierter bzw. zu ermittelnder Reibwert an der Stelle $s_0$, $\mu(s_i)$ als gemessener/geschätzter, insbesondere vorläufiger, Reibwert an der Stelle $s_i$ und $w_i$ beispielsweise als Faktor (Summe = 1) bzw. Gewichtungsfaktor, welcher einen Zusammenhang zwischen $\mu(s_i)$ und $\hat{\mu}(s_0)$ modelliert. Somit wird hierfür $\hat{\mu}(s_0)$ die Summe für N relevante Messpunkte multipliziert mit dem Gewichtungsfaktor für den Zusammenhang berechnet.

Der räumliche Zusammenhang kann durch ein Semivariogramm modelliert werden:

$$\gamma(h) = \frac{1}{2}\mathrm{Var}\big[(Z(s) - Z(s + h))\big]$$

Beispielsweise könnte auch der gleiche Sachverhalt modelliert werden, wenn diese vorstehend genannte Formel nur etwas modifiziert wird.

Zwischen Semivarianz und Covarianz ergibt sich somit folgender Zusammenhang:

$$C(h) = \gamma(\infty) - \gamma(h),$$

vorausgesetzt, es existieren endliche Werte für $\gamma(\infty)$ und $\gamma(h)$.

Diese Funktion kann auch für jeden einzelnen Messpunkt bzw. Teilabschnitt der Fahrbahn separat definiert werden, wobei gewisse Eigenschaften der letztendlichen Covarianzmatrix erhalten bleiben, was sich beispielsweise als $\gamma_{1,2}(h)$ darstellen lässt, welches die Semivarianz zwischen $\mu_1$ und $\mu_2$ beschreibt. Je nach Kriging-Verfahren können die Gewichte $w_i$ ermittelt werden und kann somit der Wert $\hat{\mu}(s_0)$ prädiziert werden.

Wird beispielsweise sogenanntes Ordinary Kriging verwendet, ergeben sich für die Prädiktion und die zugehörige Varianz, die als Quadrat der Unsicherheit angesehen werden kann, folgende Formeln:

$$\boldsymbol{c}_0 = [\gamma(\infty) - \gamma(s_1 - s_0) \quad \ldots \quad \gamma(\infty) - \gamma(s_N - s_0)]^T$$

$$\mathbf{1} = [1 \quad \ldots \quad 1]^T \quad ,$$

mit N Elementen

$$\Sigma = \begin{bmatrix} \gamma(\infty) - \gamma(0) & \gamma(\infty) - \gamma(s_1 - s_2) & \cdots & \gamma(\infty) - \gamma(s_1 - s_N) \\ \gamma(\infty) - \gamma(s_2 - s_1) & \gamma(\infty) - \gamma(0) & \cdots & \gamma(\infty) - \gamma(s_2 - s_N) \\ \vdots & \vdots & \ddots & \vdots \\ \gamma(\infty) - \gamma(s_N - s_1) & \gamma(\infty) - \gamma(s_N - s_2) & \ldots & \gamma(\infty) - \gamma(0) \end{bmatrix}$$

$$\lambda_{\hat{\mu}(s_0)} = \frac{\mathbf{1}^T \Sigma^{-1} \boldsymbol{c}_0 - 1}{\mathbf{1}^T \Sigma^{-1} \boldsymbol{c}_0}$$

$$\hat{\mu}(s_0) = \sum_{i=1}^{N} w_i \mu(s_i) = \boldsymbol{w}^T \boldsymbol{\mu} = \big[\boldsymbol{c}_0 - \mathbf{1}\lambda_{\hat{\mu}(s_0)}\big]\Sigma^{-1}\boldsymbol{\mu}$$

$$\sigma_{\hat{\mu}(s_0)} = \lambda_{\hat{\mu}(s_0)} + \sum_{i=1}^{N} w_i \gamma(s_i - s_0)$$

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

**Patentansprüche**

1. Verfahren (300) zum Bestimmen eines Reibwerts für einen Kontakt zwischen einem Reifen eines Fahrzeugs (102) und einer Fahrbahn, wobei das Verfahren (300) folgende Schritte aufweist:

   Verarbeiten (310) von Sensorsignalen (140) unter Verwendung einer Verarbeitungsvorschrift, um verarbeitete Sensorsignale (245) zu erzeugen, wobei die Sensorsignale (140) von zumindest einer Erfassungseinrichtung (104, 106, 108, 109) eingelesene, mit dem Reibwert korrelierbare Zustandsdaten repräsentieren, wobei die verarbeiteten Sensorsignale (245) zumindest einen vorläufigen Reibwert bezüglich zumindest eines gemessenen Teilabschnitts der Fahrbahn repräsentieren; und
   Ermitteln (320) des Reibwerts für einen gesuchten Teilabschnitt der Fahrbahn unter Verwendung der verarbeiteten Sensorsignale (245) und eines geostatistischen Prozesses, **dadurch gekennzeichnet, dass** im Schritt des Ermittelns (320)
   der Reibwert für den gesuchten Teilabschnitt der Fahrbahn unter Verwendung von Kriging als geostatistischem Prozess ermittelt wird, wobei ein Zusammenhang zwischen dem Reibwert für den gesuchten Teilabschnitt der Fahrbahn und dem zumindest einen vorläufigen Reibwerts bezüglich zumindest eines gemessenen Teilabschnitts der Fahrbahn unter Verwendung eines Gewichtungsfaktors modelliert wird, wobei der Gewichtungsfaktor mittels Kriging bestimmt wird.

2. Verfahren (300) gemäß Anspruch 1, **dadurch gekennzeichnet, dass** im Schritt des Ermittelns (320) ein räumlicher Zusammenhang zwischen Teilabschnitten der Fahrbahn unter Verwendung eines Semivariogramms oder dem Semivariogramm korrelierenden Größe modelliert wird.

3. Verfahren (300) gemäß einem der vorangegangenen Ansprüche, **dadurch gekennzeichnet, dass** im Schritt des Ermittelns (320) der Reibwert für den gesuchten Teilabschnitt der Fahrbahn aus vorläufigen Reibwerten bezüglich gemessener Teilabschnitte der Fahrbahn unter Verwendung des geostatistischen Prozesses interpoliert wird und/oder wobei im Schritt des Ermittelns (320) vorläufige Reibwerte bezüglich eines gemessenen Teilabschnitts der Fahrbahn unter Verwendung des geostatistischen Prozesses zu einem Reibwert zusammengefasst werden.

4. Verfahren (300) gemäß einem der vorangegangenen Ansprüche, **dadurch gekennzeichnet, dass** im Schritt des Ermittelns (320) für jeden gemessenen Teilabschnitt der Fahrbahn zumindest ein Parameter des geostatistischen Prozesses eingestellt wird.

5. Verfahren (300) gemäß einem der vorangegangenen Ansprüche, **dadurch gekennzeichnet, dass** im Schritt (310) des Verarbeitens die Sensorsignale (140) unter Verwendung eines geeigneten Signalverarbeitungsverfahren verarbeitet werden.

6. Verfahren (400) zum Steuern einer Fahrzeugfunktion (260) eines Fahrzeugs (102), wobei das Verfahren (400) folgende Schritte aufweist:

   Empfangen (410) eines Steuersignals (150), das unter Verwendung eines nach einem Verfahren (300) gemäß einem der vorangegangenen Ansprüche bestimmten Reibwertes erzeugt ist; und
   Ansteuern (420) der Fahrzeugfunktion (260) unter Verwendung des empfangenen Steuersignals (255).

7. Vorrichtung (110; 120), die eingerichtet ist, um Schritte eines Verfahrens (300; 400) gemäß einem der vorangegangenen Ansprüche in entsprechenden Einheiten auszuführen und/oder anzusteuern.

8. Computerprogramm, das dazu eingerichtet ist, wenn es durch eine Verarbeitungseinrichtung ausgeführt wird, ein Verfahren (300; 400) gemäß einem der vorangegangenen Ansprüche auszuführen und/oder anzusteuern.

9. Maschinenlesbares Speichermedium, auf dem das Computerprogramm nach Anspruch 8 gespeichert ist.

**Claims**

1. Method (300) for determining a coefficient of friction for contact between a tyre of a vehicle (102) and a roadway, wherein the method (300) comprises the following steps:

processing (310) sensor signals (140) using a processing rule, in order to generate processed sensor signals (245), wherein the sensor signals (140) represent state data read in from at least one detection device (104, 106, 108, 109) and able to be correlated with the coefficient of friction, wherein the processed sensor signals (245) represent at least one provisional coefficient of friction in relation to at least one measured section of the roadway; and

ascertaining (320) the coefficient of friction for a desired section of the roadway using the processed sensor signals (245) and a geostatistical process,

**characterized in that**, in the ascertaining step (320), the coefficient of friction for the desired section of the roadway is ascertained using Kriging as a geostatistical process, wherein a relationship between the coefficient of friction for the desired section of the roadway and the at least one provisional coefficient of friction in relation to at least one measured section of the roadway is modelled using a weighting factor, wherein the weighting factor is determined by way of Kriging.

2. Method (300) according to Claim 1, **characterized in that**, in the ascertaining step (320), a spatial relationship between sections of the roadway is modelled using a semivariogram or variable correlated with the semivariogram.

3. Method (300) according to either of the preceding claims, **characterized in that**, in the ascertaining step (320), the coefficient of friction for the desired section of the roadway is interpolated from provisional coefficients of friction in relation to measured sections of the roadway using the geostatistical process and/or wherein, in the ascertaining step (320), provisional coefficients of friction in relation to a measured section of the roadway are combined to form a coefficient of friction using the geostatistical process.

4. Method (300) according to one of the preceding claims, **characterized in that**, in the ascertaining step (320), at least one parameter of the geostatistical process is set for each measured section of the roadway.

5. Method (300) according to one of the preceding claims, **characterized in that**, in the processing step (310), the sensor signals (140) are processed using a suitable signal processing method.

6. Method (400) for controlling a vehicle function (260) of a vehicle (102), wherein the method (400) comprises the following steps:

receiving (410) a control signal (150) that is generated using a coefficient of friction determined in accordance with a method (300) according to one of the preceding claims; and
actuating (420) the vehicle function (260) using the received control signal (255).

7. Device (110; 120) designed to carry out and/or to actuate steps of a method (300; 400) according to one of the preceding claims in corresponding units.

8. Computer program designed, when it is executed by a processing device, to carry out and/or to actuate a method (300; 400) according to one of the preceding claims.

9. Machine-readable storage medium on which the computer program according to Claim 8 is stored.

**Revendications**

1. Procédé (300) permettant de déterminer un coefficient de frottement pour un contact entre un pneumatique d'un véhicule (102) et une chaussée, le procédé (300) présentant les étapes suivantes consistant à :

traiter (310) des signaux de capteur (140) en utilisant une règle de traitement afin de produire des signaux de capteur traités (245), les signaux de capteur (140) représentant des données d'état lues par au moins un dispositif d'acquisition (104, 106, 108, 109) et pouvant être mises en corrélation avec le coefficient de frottement, les signaux de capteur traités (245) représentant au moins un coefficient de frottement provisoire concernant au moins un tronçon mesuré de la chaussée ; et
établir (320) le coefficient de frottement pour un tronçon recherché de la chaussée en utilisant les signaux de capteur traités (245) et un processus géostatistique,
**caractérisé en ce qu'**à l'étape d'établissement (320), le coefficient de frottement pour le tronçon recherché de la chaussée est établi en utilisant un krigeage comme processus géostatistique, une relation entre le coefficient de frottement pour le tronçon recherché de la chaussée et ledit au moins un coefficient de frottement provisoire étant modélisée concernant au moins un tronçon mesuré de la chaussée en utilisant un facteur de pondération, le facteur de pondération étant déterminé au moyen du krigeage.

2. Procédé (300) selon la revendication 1, **caractérisé en ce qu'**à l'étape d'établissement (320), une relation spatiale entre des tronçons de la chaussée est modélisée en utilisant un variogramme ou une grandeur en corrélation avec le variogramme.

3. Procédé (300) selon l'une quelconque des revendications précédentes, **caractérisé en ce qu'**à l'étape d'établissement (320), le coefficient de frottement pour le tronçon recherché de la chaussée est interpolé à partir de coefficients de frottement provisoires concernant des tronçons mesurés de la chaussée en utilisant le processus géostatistique, et/ou dans lequel à l'étape d'établissement (320), des coefficients de frottement provisoires concernant un tronçon mesuré de la chaussée sont regroupés en un coefficient de frottement en utilisant le processus géostatistique.

4. Procédé (300) selon l'une quelconque des revendications précédentes, **caractérisé en ce qu'**à l'étape d'établissement (320), au moins un paramètre du processus géostatistique est réglé pour chaque tronçon mesuré de la chaussée.

5. Procédé (300) selon l'une quelconque des revendications précédentes, **caractérisé en ce qu'**à l'étape (310) de traitement, les signaux de capteur (140) sont traités en utilisant un procédé de traitement de signal approprié.

6. Procédé (400) permettant de commander une fonction de véhicule (260) d'un véhicule (102), le procédé (400) présentant les étapes suivantes consistant à :

recevoir (410) un signal de commande (150) qui est produit en utilisant un coefficient de frottement déterminé selon un procédé (300) selon l'une quelconque des revendications précédentes ; et
piloter (420) la fonction de véhicule (260) en utilisant le signal de commande reçu (255).

7. Dispositif (110 ; 120), qui est conçu pour exécuter et/ou piloter des étapes d'un procédé (300 ; 400) selon l'une quelconque des revendications précédentes dans des unités correspondantes.

8. Programme informatique, qui est conçu, lorsqu'il est exécuté par un dispositif de traitement, pour exécuter et/ou piloter un procédé (300 ; 400) selon l'une quelconque des revendications précédentes.

9. Support de stockage lisible par machine, sur lequel est stocké le programme informatique selon la revendication 8.

FIG. 1

FIG. 2

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005060219 A1
- US 2015142388 A1
- US 2011144875 A1
- DE 102015201383 A1
- DE 102012112725 A1